# EUROPEAN PATENT APPLICATION

(11) **EP 4 834 102 A1**
(43) Date of publication of application: **04.11.2026**
(21) Application number: 26171794.6
(22) Date of filing: 10.04.2026
(51) Int. Cl.: A01K 27/00, A01K 15/02

(54) **DOG LEASH TRAINING DEVICE WITH INTEGRATED WHISTLE MECHANISM**

(30) Priority: 14.04.2025 US 202563788519 P
(71) Applicant: Minogue, David, Boston, MA 01982 (US)
(72) Inventor: Minogue, David, Boston (US)
(74) Representative: FRKelly

(57) **Abstract**

A dog leash training device includes a housing, a whistle mechanism disposed within the housing, an actuator mechanism configured to activate the whistle mechanism in response to a pulling force, and a connector for attaching the device between a dog collar and a leash. The whistle mechanism emits a high-frequency sound when activated. The actuator mechanism includes a sliding portion that moves within the housing in response to the pulling force. A fluid canister supplies a fluid to the whistle mechanism when activated. The housing has a generally cylindrical shape with end caps, one containing an opening for the whistle and another for the connector. The device attaches between a dog collar and leash to provide auditory feedback during walks when pulling occurs.

## Description

### CROSS-REFERENCE TO RELATED APPLICATIONS

The present application claims priority to U.S. provisional patent application 63/788,519 titled "Dog Leash Training Device with Integrated Whistle Mechanism" and filed April 14, 2025, the contents of which are incorporated by reference herein in its entirety.

### TECHNICAL FIELD

The present disclosure relates to dog training devices, and more particularly to a leash-mounted device that emits a high-frequency whistle sound in response to pulling to discourage undesirable leash behavior.

### BACKGROUND

Dog ownership has become increasingly popular in recent years, with many individuals and families enjoying the companionship and benefits of having a canine pet. However, one common challenge faced by dog owners is managing their pet's behavior during walks, particularly when it comes to leash pulling. Leash pulling can be a frustrating and potentially dangerous behavior, as it may lead to injuries for both the dog and the handler.

Traditional methods of addressing leash pulling have included various training techniques and specialized equipment. Some owners opt for verbal commands and positive reinforcement to encourage proper leash etiquette. Others may use physical tools such as prong collars, choke chains, or harnesses designed to discourage pulling. However, these approaches often have limitations in their effectiveness or may raise concerns about the comfort and well-being of the animal.

The use of auditory stimuli in dog training has been explored as an alternative to physical correction methods. High-frequency sounds, often inaudible to human ears but detectable by dogs, have been utilized in various training contexts. These sounds can serve as attention-grabbing cues or deterrents for unwanted behaviors.

As the field of pet care continues to evolve, there is ongoing interest in developing innovative solutions that can assist owners in training their dogs effectively and humanely. Ideally, such solutions would be easy to use, portable, and adaptable to different dog sizes and breeds. Additionally, there is a growing emphasis on training methods that prioritize the physical and psychological well-being of the animal while still achieving desired behavioral outcomes.

The integration of technology into pet care products has opened up new possibilities for addressing common training challenges. From smart collars to mobile applications, these advancements aim to provide owners with more tools and information to support their pets' development and maintain their health.

As research in animal behavior and training methodologies progresses, there remains room for improvement in the tools and techniques available to dog owners for managing leash behavior. Effective solutions in this area have the potential to enhance the walking experience for both dogs and their handlers, promoting safer and more enjoyable outings for all involved.

### SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

According to an aspect of the present disclosure, a dog leash training device is provided. The device includes a housing, a whistle mechanism disposed within the housing, an actuator mechanism configured to activate the whistle mechanism in response to a pulling force, and a connector for attaching the device between a dog collar and a leash.

According to other aspects of the present disclosure, the device may include one or more of the following features. The whistle mechanism may comprise a high-frequency whistle configured to emit sound at a frequency between 16,000 Hz and 22,000 Hz. The actuator mechanism may comprise a sliding portion configured to move within the housing in response to the pulling force. The sliding portion may include a protrusion that engages with a corresponding slot on an inner surface of the housing to limit circumferential rotation of the sliding portion. The device may further comprise an attachment point for a leash. The attachment point may include protrusions configured to be disposed within holes in the sliding portion such that a pulling force on the attachment point causes the sliding portion to move in an axial direction within the housing. The device may further comprise a fluid canister disposed within the housing and configured to supply air to the whistle mechanism when activated by the actuator mechanism. The housing may comprise a first end cap and a second end cap, the first end cap including an opening for the whistle mechanism. The second end cap may include an opening for the connector. The connector may comprise a clip configured to attach to a dog collar or leash. The housing may have a generally cylindrical shape and extend longitudinally between two ends. The actuator mechanism may be configured to activate the whistle mechanism when a predetermined threshold of pulling force is exceeded.

According to another aspect of the present disclosure, a method of training a dog using a leash-mounted device is provided. The method includes attaching a leash-mounted device between a dog collar on a dog and a leash, and while walking the dog, allowing a whistle mechanism within the leash-mounted device to activate in response to a pulling force applied to the leash-mounted device, causing the leash-mounted device to emit a high-frequency sound.

According to other aspects of the present disclosure, the method may include one or more of the following features. The high-frequency sound may be emitted at a frequency between 16,000 Hz and 22,000 Hz. The method may further comprise supplying fluid (such as air or CO₂) from a fluid canister disposed within the device to the whistle mechanism when activating the whistle mechanism. Attaching the device may comprise connecting a first end of the device to the dog collar and a second end of the device to the leash. Connecting the first end of the device to the dog collar may comprise using a clip attached to the device. Activating the whistle mechanism may occur when the detected pulling force exceeds a predetermined threshold. The method may further comprise repeating the steps of detecting the pulling force and activating the whistle mechanism during a walk to reinforce desired leash behavior. The method may further comprise gradually increasing the predetermined threshold of pulling force required to activate the whistle mechanism as the dog's leash behavior improves.

The foregoing general description of the illustrative embodiments and the following detailed description thereof are merely exemplary aspects of the teachings of this disclosure and are not restrictive.

### BRIEF DESCRIPTION OF FIGURES

Non-limiting and non-exhaustive examples are described with reference to the following figures.
FIG. 1A illustrates a perspective view of a training device, according to aspects of the present disclosure.
FIG. 1B shows an exploded view of the training device of FIG. 1A, according to an embodiment.
FIG. 2 illustrates a side view of the training device attached between a dog and a leash, according to aspects of the present disclosure.

### DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

The present disclosure relates to a dog leash training device designed to address the challenges associated with dogs pulling on leashes during walks. This device may provide a non-invasive and humane approach to leash training, offering a portable and convenient solution for dog owners.

In some cases, the dog leash training device may be constructed to be sturdy and tough, allowing the device to withstand the pressure exerted by dogs pulling on leashes. The robust construction of the device may enable consistent performance even under significant strain.

The dog leash training device may be designed to reduce the frequency and intensity of pulling behavior in dogs. Through repeated use and training, the device may contribute to a substantial decrease in pulling incidents. In some implementations, the reduction in pulling behavior may reach up to 62.86% after consistent training sessions.

Portability and compactness may be key features of the dog leash training device. The device may be designed to be easily carried and used during walks, providing convenience for dog owners. The compact nature of the device may allow for seamless integration into regular walking routines without adding significant bulk or weight.

The dog leash training device may incorporate various components to achieve its training function. These components may work in conjunction to detect pulling forces and provide a response aimed at discouraging pulling behavior. The specific mechanisms and responses may vary depending on the particular implementation of the device.

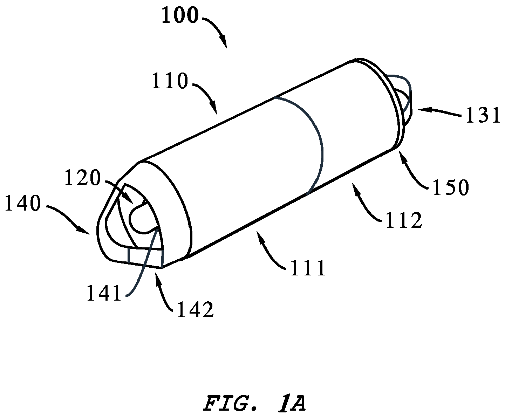

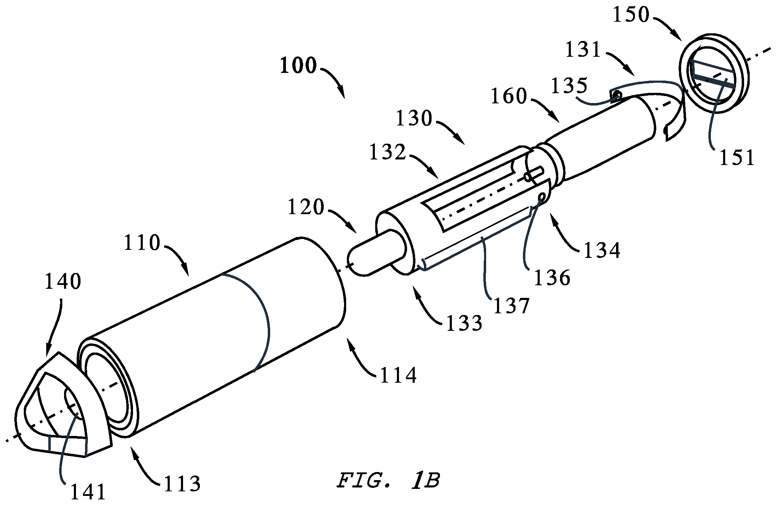

The training device 100 may comprise a housing 110, as illustrated in FIG. 1A and FIG. 1B. In some cases, the housing 110 may have a generally cylindrical shape and extend longitudinally between two ends. The housing 110 may include a first portion 111 and a second portion 112, which may form the main body of the training device 100.

In some implementations, the housing 110 may have a first end 113 and a second end 114, as shown in FIG. 1B. The first end 113 and second end 114 may define the longitudinal extent of the housing 110. The housing 110 may be configured to contain various internal components of the training device 100, such as the whistle mechanism 120 and the actuator mechanism 130.

The housing 110 may be manufactured using any appropriate manufacturing technique. The housing may be may of one or more polymeric materials. For example, first portion 111 may include a first polymeric material, and second portion 112 may be include a second polymeric material. For example, the housing may be made of a thermoplastic material, such as acrylonitrile butadiene styrene (ABS), polycarbonate (PC), polyamide (PA), polyoxymethylene (POM), high-density polyethylene (HDPE), polypropylene (PP), polyethylene terephthalate (PET), polyetheretherketone (PEEK), or combinations thereof.

Some or all of the housing may be coated. For example, the first portion may be uncoated, while the second portion may include a coating for, e.g., comfort, grip, etc. The coating may be, e.g., a silicone coating, a thermoplastic polyurethane coating, etc.

The material selection may provide the housing 110 with enhanced durability and strength, allowing the training device 100 to withstand the forces exerted during use.

The cylindrical shape of the housing 110 may facilitate a compact and streamlined design for the training device 100. This shape may allow for efficient arrangement of internal components and may contribute to the overall portability of the device. The housing 110 may be designed to protect the internal mechanisms from external elements while allowing for the necessary movement of components within the device.

The training device 100 may include a whistle mechanism 120 disposed within the housing 110, as illustrated in FIG. 1A and FIG. 1B. The whistle mechanism 120 may be positioned within the internal space of the housing 110, between the first portion 111 and the second portion 112. In some cases, the whistle mechanism 120 may be located near the first end 113 of the housing 110.

The whistle mechanism 120 may be configured to emit a high-frequency sound when activated. In some implementations, the whistle mechanism 120 may comprise a high-frequency whistle. As used herein, "high-frequency" generally refers to frequencies of at least 16,000 Hz. In some embodiments, the whistle mechanism may be configured to emit sound at a frequency between 16,000 Hz and 22,000 Hz. In some preferred embodiments, the whistle mechanism may be configured to emit sound at a frequency of at least 18,000 Hz, and more preferably at least 20,000 Hz. This frequency range may be particularly effective for dog training purposes, as it may be within the hearing range of dogs while being less noticeable, and preferably unnoticeable, to human ears.

The housing 110 may include an opening for whistle 141, as shown in FIG. 1A and FIG. 1B. The opening for whistle 141 may allow the a portion of the whistle to extend through the opening. The opening may allow for high-frequency sound emitted by the whistle mechanism 120 to exit the housing 110 with minimal interference. In some cases, the opening for whistle 141 may be positioned on the first end 113 of the housing 110, aligning with the location of the whistle mechanism 120 within the housing 110.

The whistle mechanism 120 may be designed to work in conjunction with the actuator mechanism 130.

Preferably, the actuator mechanism is configured to cause a gas cylinder (such as an air cylinder, or a CO₂ cylinder) to open the valve of the gas cylinder, allowing the gas to escape the cylinder. Preferably, the gas is directed towards the whistle mechanism.

The gas cylinder may have any appropriate dimensions. For example, in some instances, the gas cylinder may have a diameter of 25 mm - 45 mm. In some instances, the gas cylinder may have an axial length of 125 mm - 275 mm. In some embodiments, the gas cylinder may be configured to hold between 5 g - 100 g of the gas. In some instances, the gas cylinder may have a threaded neck for interfacing with, e.g., the actuator mechanism. In some embodiment, the gas cylinder may have an unthreaded neck.

When the actuator mechanism 130 is activated in response to a pulling force, the whistle mechanism 120 may be triggered to emit the high-frequency sound. This interaction between the actuator mechanism 130 and the whistle mechanism 120 may form the core functionality of the training device 100, providing an auditory response to pulling behavior.

In some implementations, the whistle mechanism 120 may be constructed from materials that allow for consistent and reliable sound production. The design of the whistle mechanism 120 may be optimized to produce the desired frequency range while maintaining durability within the housing 110.

The positioning of the whistle mechanism 120 within the housing 110 may be carefully considered to ensure effective sound propagation. The internal structure of the housing 110 may be designed to channel the sound towards the opening for whistle 141, maximizing the audibility of the high-frequency sound when emitted.

The training device 100 may include an actuator mechanism 130 configured to activate the whistle mechanism 120 in response to a pulling force. As illustrated in FIG. 1B, the actuator mechanism 130 may comprise a sliding portion 132 configured to move within the housing 110 in response to the pulling force.

In some cases, the sliding portion 132 may have a first end 133 and a second end 134. The sliding portion 132 may be designed to move in an axial direction within the housing 110 when a pulling force is applied to the training device 100. This movement may facilitate the activation of the whistle mechanism 120.

The sliding portion 132 may include a protrusion 137 that engages with a corresponding slot on an inner surface of the housing 110. This engagement may limit circumferential rotation of the sliding portion 132 within the housing 110, ensuring that the sliding portion 132 moves primarily in the axial direction.

In some implementations, the sliding portion 132 may include a hole for receiving protrusion 136. This hole may be configured to receive a protrusion 135 from another component of the training device 100, such as a connector or attachment point for a leash. The interaction between the protrusion 135 and the hole for receiving protrusion 136 may allow for the transfer of pulling force from the leash to the sliding portion 132.

The actuator mechanism 130 may be configured to activate the whistle mechanism 120 when a predetermined threshold of pulling force is exceeded. This threshold may be set to distinguish between normal walking tension and excessive pulling by a dog. When the pulling force surpasses this threshold, the sliding portion 132 may move sufficiently to trigger the activation of the whistle mechanism 120.

In some cases, the movement of the sliding portion 132 may compress or displace air within the housing 110, directing airflow towards the whistle mechanism 120. This airflow may cause the whistle mechanism 120 to emit a high-frequency sound through the opening for whistle 141.

The design of the actuator mechanism 130 may allow for consistent and reliable activation of the whistle mechanism 120 in response to pulling forces. The sliding portion 132 and its associated components may be constructed from durable materials to withstand repeated use and the forces exerted during dog walking.

The training device 100 may further comprise a fluid canister 160 disposed within the housing 110, as illustrated in FIG. 1B. The fluid canister 160 may be positioned within the internal space of the housing 110, between the first portion 111 and the second portion 112. In some cases, the fluid canister 160 may be located near the second end 114 of the housing 110.

The fluid canister 160 may be configured to supply air to the whistle mechanism 120 when activated by the actuator mechanism 130. In some implementations, the fluid canister 160 may contain compressed air or another suitable gas. The fluid canister 160 may be designed to release a controlled amount of air when triggered by the movement of the actuator mechanism 130.

In some cases, the fluid canister 160 may be positioned in proximity to the sliding portion 132 of the actuator mechanism 130. This arrangement may allow for efficient activation of the fluid canister 160 when the sliding portion 132 moves in response to a pulling force. The movement of the sliding portion 132 may trigger the release of air from the fluid canister 160.

The released air from the fluid canister 160 may be directed towards the whistle mechanism 120. In some implementations, the housing 110 may include internal channels or pathways to guide the air from the fluid canister 160 to the whistle mechanism 120. These channels may ensure that the released air effectively reaches the whistle mechanism 120 to produce the desired high-frequency sound.

The fluid canister 160 may be designed to be replaceable or refillable, allowing for extended use of the training device 100. In some cases, the housing 110 may include a removable panel or access point to facilitate the replacement or refilling of the fluid canister 160.

The capacity of the fluid canister 160 may be selected to provide a sufficient number of activations for typical training sessions. The release mechanism of the fluid canister 160 may be calibrated to dispense an appropriate amount of air for each activation, balancing the need for audible sound production with the conservation of the air supply.

In some implementations, the fluid canister 160 may include a pressure regulator to ensure consistent air flow to the whistle mechanism 120 regardless of the remaining air pressure within the fluid canister 160. This may help maintain consistent sound production throughout the lifespan of the fluid canister 160.

The integration of the fluid canister 160 within the training device 100 may provide a reliable and controlled source of air for activating the whistle mechanism 120. This design may contribute to the overall effectiveness and consistency of the training device 100 in responding to pulling forces during dog walks.

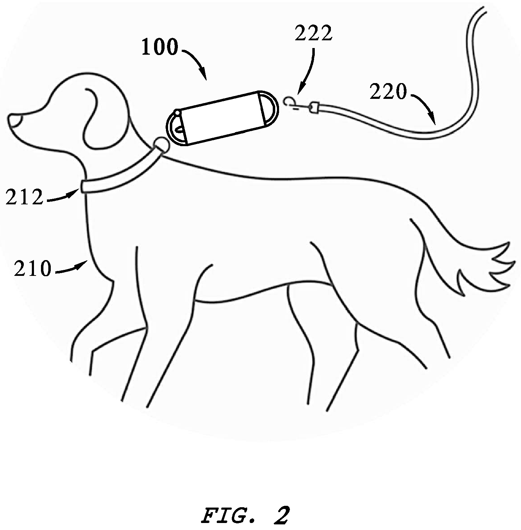

The training device 100 may include connectors and attachment points for securing the device between a dog collar and a leash. These components may facilitate the integration of the training device 100 into a typical dog-walking setup, as illustrated in FIG. 2.

In some cases, the training device 100 may comprise a second end connector 131, as shown in FIG. 1A and FIG. 1B. The second end connector 131 may be positioned at the second end 114 of the housing 110. The second end connector 131 may be configured to attach to a leash, providing a secure connection point between the training device 100 and the leash.

The training device 100 may also include a clip 142, as illustrated in FIG. 1A. The clip 142 may be attached to the first end cap 140 of the housing 110. In some implementations, the clip 142 may be configured to attach to a dog collar, allowing for a secure connection between the training device 100 and the collar worn by the dog.

FIG. 2 demonstrates how the training device 100 may be attached between a dog 210 and a leash 220. The clip 142 may be used to connect the first end of the training device 100 to a collar 212 worn by the dog 210. The second end connector 131 may be used to connect the second end of the training device 100 to the leash 220.

In some cases, the leash 220 may include a clip 222, as shown in FIG. 2. The clip 222 on the leash 220 may be designed to engage with the second end connector 131 of the training device 100, providing a secure attachment point between the leash 220 and the training device 100.

The attachment points of the training device 100 may be designed to work in conjunction with the internal mechanisms of the device. For example, the second end connector 131 may be connected to the sliding portion 132 of the actuator mechanism 130. In some implementations, the second end connector 131 may include protrusions configured to be disposed within holes in the sliding portion 132.

This configuration may allow a pulling force applied to the second end connector 131 to be transmitted to the sliding portion 132, causing the sliding portion 132 to move in an axial direction within the housing 110. The movement of the sliding portion 132 may then activate the whistle mechanism 120 or trigger the release of air from the fluid canister 160, as previously described.

The connectors and attachment points of the training device 100 may be constructed from durable materials capable of withstanding the forces typically encountered during dog walking. The design of these components may prioritize security and reliability, ensuring that the training device 100 remains firmly attached between the dog collar and leash throughout use.

The training device 100 may include a first end cap 140 and a second end cap 150, as illustrated in FIG. 1A and FIG. 1B. The first end cap 140 and the second end cap 150 may be positioned at opposite ends of the housing 110, enclosing the internal components of the training device 100.

The first end cap 140 and/or second end cap 150 may be configured to be permanently affixed to the main housing body (e.g., a body defined by first portion 111 and second portion 112). The first end cap 140 and/or second end cap 150 may be configured to be removably attached to the main housing body. The first end cap 140 and/or second end cap 150 may be configured to be couplable to the main housing body via threads, tabs, etc. The first end cap 140 and/or second end cap 150 may be glued or welded to the main housing body.

The first end cap 140 may be located at the first end 113 of the housing 110. In some cases, the first end cap 140 may include an opening for whistle 141. The opening for whistle 141 may allow the high-frequency sound produced by the whistle mechanism 120 to exit the housing 110. The positioning of the opening for whistle 141 on the first end cap 140 may align with the location of the whistle mechanism 120 within the housing 110, facilitating efficient sound propagation.

In some implementations, the first end cap 140 may also include a clip 142. The clip 142 may be attached to or integrated with the first end cap 140, providing a means for securing the training device 100 to a dog collar 212.

The training device 100 may further comprise a second end cap 150, which may be positioned at the second end 114 of the housing 110. The second end cap 150 may serve to enclose the internal components of the training device 100 at the opposite end from the first end cap 140.

In some cases, the second end cap 150 may include an opening for second end connector 151. The opening for second end connector 151 may allow the second end connector 131 to extend through the second end cap 150, providing a point of attachment for a leash 220. The positioning of the opening for second end connector 151 on the second end cap 150 may align with the location of the actuator mechanism 130 within the housing 110, allowing for the transmission of pulling forces from the leash 220 to the internal components of the training device 100.

The first end cap 140 and the second end cap 150 may be designed to securely attach to the housing 110, creating a sealed environment for the internal components of the training device 100. In some implementations, the end caps may be removable to allow access to the internal components for maintenance or replacement of parts such as the fluid canister 160.

The materials used for the first end cap 140 and the second end cap 150 may be selected to provide durability and resistance to the forces encountered during use of the training device 100. The design of the end caps may also contribute to the overall aesthetics and ergonomics of the training device 100, enhancing its usability during dog walking activities.

The training device 100 may operate through a series of interactions between its various components to perform its function as a dog leash training tool. The sequence of events from a dog pulling to the emission of a whistle sound may involve several steps and mechanisms within the device.

In some cases, the training device 100 may be attached between a dog 210 and a leash 220, as illustrated in FIG. 2. The clip 142 on the first end cap 140 may be secured to the collar 212 of the dog 210, while the second end connector 131 may be attached to the leash 220. This configuration may allow the training device 100 to detect and respond to pulling forces exerted by the dog 210 during a walk.

When the dog 210 pulls on the leash 220, the pulling force may be transmitted through the second end connector 131 to the actuator mechanism 130 within the housing 110. The sliding portion 132 of the actuator mechanism 130 may move in response to this pulling force. In some implementations, the sliding portion 132 may move axially within the housing 110, guided by the interaction between the protrusion 137 on the sliding portion 132 and a corresponding slot on the inner surface of the housing 110.

The movement of the sliding portion 132 may trigger the activation of the whistle mechanism 120. In some cases, this activation may occur when the pulling force exceeds a predetermined threshold. The threshold may be set to distinguish between normal walking tension and excessive pulling by the dog 210.

Upon activation, the whistle mechanism 120 may emit a high-frequency sound through the opening for whistle 141 in the first end cap 140. The emission of this sound may serve as a deterrent or training cue for the dog 210, discouraging pulling behavior.

In some implementations, the activation of the whistle mechanism 120 may involve the release of air from the fluid canister 160. The movement of the sliding portion 132 may trigger the release of air from the fluid canister 160, which may then be directed towards the whistle mechanism 120 to produce the high-frequency sound.

The training device 100 may be designed to allow for repeated activation during a walk, reinforcing desired leash behavior. Each time the dog 210 exerts a pulling force that exceeds the predetermined threshold, the sequence of events may be repeated, activating the whistle mechanism 120 and emitting the high-frequency sound.

In some cases, the training device 100 may be configured to gradually increase the predetermined threshold of pulling force required to activate the whistle mechanism 120 as the dog's leash behavior improves. This gradual increase may be achieved through adjustments to the actuator mechanism 130 or the interaction between the sliding portion 132 and other components within the housing 110.

The repeated activation of the whistle mechanism 120 in response to pulling forces, combined with the potential for gradual threshold increases, may contribute to the effectiveness of the training device 100 in modifying the dog's leash behavior over time. The consistent and immediate feedback provided by the high-frequency sound may help reinforce desired walking behavior and discourage excessive pulling.

A number of implementations have been described. Nevertheless, it will be understood that various modifications may be made without departing from the spirit and scope of the disclosure. Accordingly, other implementations are within the scope of the following claims.

## Claims

1. A dog leash training device, comprising:
a housing;
a whistle mechanism disposed within the housing;
an actuator mechanism configured to activate the whistle mechanism in response to a pulling force; and
a connector for attaching the device between a dog collar and a leash.

2. The dog leash training device of claim 1, wherein the whistle mechanism comprises a high-frequency whistle configured to emit sound at a frequency between 16,000 Hz and 22,000 Hz.

3. The dog leash training device of claim 1 or 2, wherein the actuator mechanism comprises a sliding portion configured to move within the housing in response to the pulling force.

4. The dog leash training device of claim 3, wherein the sliding portion includes a protrusion that engages with a corresponding slot on an inner surface of the housing to limit circumferential rotation of the sliding portion.

5. The dog leash training device of claim 3 or 4, further comprising an attachment point of the dog leash training device for a leash.

6. The dog leash training device of claim 5, wherein the attachment point includes protrusions configured to be disposed within holes in the sliding portion such that a pulling force on the attachment point causes the sliding portion to move in an axial direction within the housing.

7. The dog leash training device of any of the preceding claims, further comprising a fluid canister disposed within the housing and configured to supply air to the whistle mechanism when activated by the actuator mechanism.

8. The dog leash training device of any of the preceding claims, wherein the housing comprises a first end cap and a second end cap, the first end cap including an opening for the whistle mechanism.

9. The dog leash training device of claim 8, wherein the second end cap includes an opening for the connector.

10. The dog leash training device of any of the preceding claims,
wherein the connector comprises a clip configured to attach to a dog collar or leash;
wherein the housing has a generally cylindrical shape and extends longitudinally between two ends; and/or
wherein the actuator mechanism is configured to activate the whistle mechanism when a predetermined threshold of pulling force is exceeded.

11. A method of training a dog using a leash-mounted device, comprising:
attaching a leash-mounted device between a dog collar on a dog and a leash; and
while walking the dog, allowing a whistle mechanism within the leash-mounted device to activate in response to a pulling force applied to the leash-mounted device, causing the leash-mounted device to emit a high-frequency sound.

12. The method of claim 11, further comprising supplying air from a fluid canister disposed within the device to the whistle mechanism when activating the whistle mechanism.

13. The method of claim 11 or 12,
wherein attaching the device comprises connecting a first end of the device to the dog collar and a second end of the device to the leash; and/or
wherein activating the whistle mechanism occurs when the detected pulling force exceeds a predetermined threshold.

14. The method of claim 13, wherein connecting the first end of the device to the dog collar comprises using a clip attached to the device.

15. The method of any one of claims 11-14,
further comprising repeating the steps of detecting the pulling force and activating the whistle mechanism during a walk to reinforce desired leash behavior; and/or
further comprising gradually increasing the predetermined threshold of pulling force required to activate the whistle mechanism as the dog's leash behavior improves.
